# EUROPÄISCHE PATENTSCHRIFT

(11) **EP 2 197 068 B1**
(45) Veröffentlichungstag und Bekanntmachung des Hinweises auf die Patenterteilung: **31.08.2011**
(21) Anmeldenummer: 09176287.2
(22) Anmeldetag: 18.11.2009
(51) Int. Cl.: H01M 8/06, H01M 8/00, B60K 6/32

(54) **Vorrichtung und Verfahren zur Erzeugung von mechanischer und elektrischer Energie**
Method and device for the production of mechanical and electrical energy
Dispositif et procédé de production d'énergie mécanique et électrique

(30) Priorität: 11.12.2008 DE 102008063507
(43) Veröffentlichungstag der Anmeldung: 16.06.2010
(73) Patentinhaber: Deutsches Zentrum für Luft- und Raumfahrt e.V., 51147 Köln (DE)
(72) Erfinder: Frick, Viktoriya, 70190, Stuttgart (DE); Tamme, Rainer, 73760, Ostfildern (DE)
(74) Vertreter: Hoeger, Stellrecht & Partner Patentanwälte

(56) Entgegenhaltungen:
- DE-A1- 10 336 759
- DE-B4-102006 013 037
- US-A1- 2008 187 789

## Beschreibung

Die vorliegende Erfindung betrifft eine Vorrichtung zur Erzeugung von mechanischer und elektrischer Energie aus einem Brennstoff.

Ferner betrifft die Erfindung ein Verfahren zur Erzeugung von mechanischer und elektrischer Energie aus einem Brennstoff.

Fahrzeuge aller Art, die durch Wärmekraftmaschinen angetrieben werden, umfassen stets auch Steuerungssysteme, Elektromotoren und andere Verbraucher, die mit elektrischer Energie versorgt werden müssen. Sowohl in der Automobil- wie auch in der Flugzeugindustrie führten insbesondere die Entwicklungen der letzten Jahre zu einer stetigen Zunahme der in den Fahrzeugen eingesetzten elektrisch betriebenen Systeme, und damit zu einer deutlichen Erhöhung des elektrischen Energiebedarfs.

Traditionell erfolgt die Versorgung von Fahrzeugen mit elektrischer Energie durch einen von der Wärmekraftmaschine betriebenen Generator, wobei die elektrische Energie in einem Akkumulator zwischengespeichert wird. Die Leistungsfähigkeit dieses Systems ist jedoch insbesondere durch die Kapazität des Akkumulators begrenzt, sodass eine ausreichende Versorgung mit elektrischer Energie nur während des Betriebs der Wärmekraftmaschine sichergestellt ist.

Ein effizienteres Verfahren für die Stromerzeugung stellt der Einsatz von Brennstoffzellensystemen dar. Für den Betrieb von Brennstoffzellensystemen ist jedoch ein separater Brennstoff, in der Regel Wasserstoff, erforderlich, was beim Betrieb von Fahrzeugen (oder auch bei anderen mobilen oder dezentralen Anwendungen) erhebliche Einschränkungen mit sich bringt. Neben dem Brennstoff für die Wärmekraftmaschine muss ein zweiter Brennstoff separat bereitgestellt und im Fahrzeug mitgeführt werden.

Das Dokument DE 10 2006 013 037 A1 offenbart eine Vorrichtung und ein Verfahren zur Energiegewinnung aus einem Kohlenwasserstoffgemisch mit wenigstens einer dehydrierbaren Verbindung, insbesondere aus einem Kraftstoff auf Kohlenwasserstoffbasis, vorzugsweise aus Kerosin.

Aus der DE 103 37 755 A1 ist ein Verbrennungsmotor bekannt mit einem Kraftstoffversorgungssystem und einem Abgassystem, wobei das Kraftstoffversorgungssystem eine Trenneinheit zur Trennung und/oder Modifikation von Kraftstoff in Fraktionen mit unterschiedlichen Eigenschaften aufweist.

Die DE 199 46 606 A1 offenbart ein Verfahren und eine Vorrichtung zum Bilden eines Kraftstoff-Luftgemisches für einen Verbrennungsmotor während einer Kaltstart- und Warmlaufphase.

Der Erfindung liegt die Aufgabe zugrunde, eine Vorrichtung zur Erzeugung von mechanischer und elektrischer Energie vorzuschlagen, welche effizient und auf einfache Weise betrieben werden kann.

Diese Aufgabe wird bei der Vorrichtung der eingangs genannten Art erfindungsgemäß dadurch gelöst, dass die Vorrichtung umfasst:
- eine mit dem Brennstoff betriebene Wärmekraftmaschine;
- eine thermische Trenneinrichtung, mit der eine Zielfraktion des Brennstoffs abtrennbar ist;
- eine Umwandlungseinrichtung, mit der aus der Zielfraktion Wasserstoff erzeugbar ist; und
- ein mit dem Wasserstoff als Brenngas betriebenes Brennstoffzellensystem, wobei die thermische Trenneinrichtung eine Einrichtung zur fraktionierten Kristallisation des Brennstoffs umfaβt.

Die erfindungsgemäße Vorrichtung ermöglicht die Erzeugung von mechanischer (und thermischer) Energie durch eine Wärmekraftmaschine und die Erzeugung von elektrischer Energie durch ein Brennstoffzellensystem, wobei die Vorrichtung mit einem einzigen Brennstoff betrieben werden kann. Dabei wird die Möglichkeit ausgenutzt, aus einer oder mehreren Komponenten des für die Wärmekraftmaschine eingesetzten Brennstoffs durch chemische Umwandlung Wasserstoff zu erzeugen, der als Brenngas für das Brennstoffzellensystem eingesetzt wird, um elektrische Energie zu erzeugen.

Die für die Wasserstofferzeugung eingesetzte Zielfraktion wird zuvor von dem Brennstoff abgetrennt. Die Restfraktion, d.h. der nicht für die Erzeugung von Wasserstoff abgetrennte Teil des Brennstoffs, kann entweder direkt der Wärmekraftmaschine zugeführt oder zunächst in einen Brennstofftank zurückgeführt werden, z.B. wenn die Wärmekraftmaschine nicht in Betrieb ist. Das Brennstoffzellensystem kann bei der erfindungsgemäßen Vorrichtung somit unabhängig von der Wärmekraftmaschine betrieben werden, was insbesondere bei der Versorgung von Fahrzeugen mit elektrischer Energie einen erheblichen Vorteil darstellt.

Die Wärmekraftmaschine umfasst im Rahmen der vorliegenden Erfindung bevorzugt einen Verbrennungsmotor oder eine Gasturbine, insbesondere ein Strahltriebwerk. Verbrennungsmotoren wie z.B. Ottomotoren oder Dieselmotoren kommen insbesondere bei Kraftfahrzeugen, Schiffen und Propellerflugzeugen zum Einsatz, während Strahltriebwerke in Düsenflugzeugen Verwendung finden. Beim Einsatz der vorliegenden Erfindung in Fahrzeugen erzeugt die Wärmekraftmaschine mechanische Energie in Form von kinetischer Energie für den Antrieb des Fahrzeugs.

Die erfindungsgemäße Vorrichtung ist jedoch nicht auf Fahrzeuge beschränkt, sondern kann auch in anderen Bereichen für die Erzeugung von mechanischer und elektrischer Energie eingesetzt werden.

Der Brennstoff umfasst vorzugsweise ein Gemisch aus aliphatischen und/oder aromatischen Kohlenwasserstoffen. In erster Linie fallen hierunter fossile Brennstoffe, die durch Destillation von Mineralöl gewonnen werden, wie z.B. Dieselkraftstoff, Kerosin und verschiedene Benzine. Es können jedoch auch aus biologischen Materialien gewonnene Kohlenwasserstoffgemische, sogenannte Biokraftstoffe, eingesetzt werden. Allgemein kann als Brennstoff im Sinne der vorliegenden Erfindung jedes Kohlenwasserstoffgemisch dienen, welches mindestens eine für die Wasserstofferzeugung geeignete Komponente enthält.

Günstigerweise umfasst die Zielfraktion ein Gemisch aus Kohlenwasserstoffen, welches für die Erzeugung von Wasserstoff durch die Umwandlungseinheit gegenüber dem Brennstoff optimiert ist. Die Erzeugung von Wasserstoff erfolgt aus einer oder mehreren Komponenten, insbesondere Kohlewasserstoffverbindungen, die in dem Brennstoff bzw. in der Zielfraktion enthalten sind, wie dies weiter unten im Detail beschrieben wird. Die Optimierung der Zielfraktion ist daher im Rahmen der vorliegenden Erfindung so zu verstehen, dass die für die Wasserstofferzeugung in Betracht kommende(n) Komponente(n) in der Zielfraktion in einem höheren Anteil enthalten sind als in dem Brennstoff, sodass die Erzeugung von Wasserstoff durch die Umwandlungseinrichtung mit einer höheren Ausbeute und/oder einer höheren Effizienz durchgeführt werden kann. Je nach Art des Brennstoffs und der für die Wasserstofferzeugung gewählten Prozessbedingungen kann es sich hierbei um unterschiedliche Komponenten, d.h. um unterschiedliche Zusammensetzungen der optimalen Zielfraktion, handeln.

Bevorzugt weist die Zielfraktion einen höheren Anteil an aliphatischen Kohlenwasserstoffen auf als der Brennstoff. Aliphatische Kohlenwasserstoffe, insbesondere Paraffine und Naphthene, eignen sich in besonderem Maße für die Erzeugung von Wasserstoff. Demgegenüber kann aus aromatischen Kohlenwasserstoffen nur sehr schlecht Wasserstoff erzeugt werden, und deren Anwesenheit bei den für die Wasserstofferzeugung geeigneten Prozessbedingungen kann zudem zur Bildung von Ruß führen. Es ist daher bevorzugt, wenn die Zielfraktion einen möglichst geringen Anteil an Aromaten aufweist.

Weiterhin ist es bevorzugt, wenn die Zielfraktion einen geringeren Anteil an schwefelhaltigen Verbindungen aufweist als der Brennstoff. Die Erzeugung von Wasserstoff aus der Zielfraktion erfolgt bevorzugt mit Hilfe von Katalysatoren, deren Aktivität durch eine zu hohe Konzentration an schwefelhaltigen Verbindungen irreversibel herabgesetzt wird (so genannte Katalysatorgifte). Auch die Funktion des Brennstoffzellensystems kann durch schwefelhaltige Verbindungen beeinträchtigt werden. Da die verwendeten Brennstoffe üblicherweise einen nennenswerten Anteil an schwefelhaltigen Verbindungen aufweisen, kann durch die Abtrennung einer zumindest teilweise entschwefelten Zielfraktion ein dauerhaft effektiver Betrieb der Umwandlungseinrichtung und des Brennstoffzellensystems ermöglicht werden.

Der für die Erzeugung von Wasserstoff bzw. elektrischer Energie benötigte Anteil des Brennstoffs ist bei den typischen Anwendungen der erfindungsgemäßen Vorrichtung relativ gering, beispielsweise liegt er im Bereich von ca. 1 bis 5% beim Betrieb von Flugzeugen. Aus diesem Grund ist es wesentlich effektiver und wirtschaftlicher, gemäß der Erfindung lediglich von einem entsprechenden Teil des Brennstoffs eine Zielfraktion für die Erzeugung von Wasserstoff abzutrennen, als alternativ auch die Wärmekraftmaschine mit einem für die Wasserstofferzeugung optimierten und/oder entschwefelten Brennstoff zu betreiben. Dadurch, dass die Abtrennung der Zielfraktion innerhalb der Vorrichtung erfolgt, also z.B. an Bord eines Kraftfahrzeuges oder eines Flugzeuges, muss lediglich für eine einzige Art von Brennstoff ein Tank sowie eine entsprechende Logistik vorgesehen werden.

Gemäß der Erfindung umfasst die Trenneinrichtung eine thermische Trenneinrichtung. Es hat sich gezeigt, dass mit Hilfe einer thermischen Trenneinrichtung, d.h. mittels einer Abtrennung der Zielfraktion aufgrund unterschiedlicher Schmelzpunkte der verschiedenen Komponenten des Brennstoffs, in vielen Fällen sowohl eine Optimierung der Zielfraktion für die Erzeugung von Wasserstoff als auch eine Verringerung des Anteils an schwefelhaltigen Verbindungen erzielt werden kann. Eine thermische Abtrennung der Zielfraktion kann darüber hinaus bereits mit einem relativ geringen apparativen Aufwand und häufig auch unter moderaten Temperatur- und Druckbedingungen durchgeführt werden.

Eine nicht erfindungsgemaße Trenneinrichtung umfasst eine Einrichtung zur Rektifikation des Brennstoffs. Bei der Rektifikation wird der Brennstoff zumindest partiell verdampft, und mittels einer Rektifikationskolonne oder dergleichen werden dann verschiedene Komponenten des Brennstoffs, insbesondere verschiedene Kohlenwasserstoffverbindungen, aufgrund ihrer unterschiedlichen Siedepunkte getrennt. Die Rektifikation kann über eine oder mehrere Stufen durchgeführt werden, und es können einzelne Komponenten oder Gruppen von mehreren Komponenten abgetrennt werden. Die für die Rektifikation benötigte thermische Energie kann dabei günstigerweise durch die Abwärme der Wärmekraftmaschine bereitgestellt werden, sodass der Wirkungsgrad der erfindungsgemäßen Vorrichtung durch den Betrieb der Trenneinrichtung nicht bzw. kaum verringert wird.

Die mittels einer Rektifikation durch die Trenneinrichtung abgetrennte Zielfraktion umfasst bevorzugt eine oder mehrere niedriger siedende Fraktionen des Brennstoffs. Diese so genannte Kopffraktion enthält in vielen Fällen einen höheren Anteil an Komponenten, die für die Erzeugung von Wasserstoff geeignet sind, sowie einen geringeren Schwefelanteil als die höher siedende Sumpffraktion. Die eine oder mehrere niedriger siedende Fraktionen können im Rahmen der Rektifikation kondensiert werden, oder es erfolgt eine Zuführung zu der Umwandlungseinrichtung direkt in gasförmigem Zustand, was eine besonders einfache Verfahrensführung ermöglicht.

Gemäß der erfindungsgemäßen Vorrichtung umfasst die thermische Trenneinrichtung eine Einrichtung zur fraktionierten Kristallisation des Brennstoffs. Es sind verschiedene Arten der fraktionierten Kristallisation bekannt, wobei die Kühlungskristallisation besonders bevorzugt ist. Bei diesem Verfahren der thermischen Trennung wird der Brennstoff soweit abgekühlt, dass ein Teil der darin enthaltenen Komponenten, insbesondere ein Teil der Kohlenwasserstoffe, aus dem flüssigen Brennstoff ausfallen bzw. auskristallisieren. Um die hierfür erforderliche Kühlung des Brennstoffs mit einem möglichst geringen Energieaufwand zu ermöglichen, kann vorteilhafterweise eine niedrige Umgebungstemperatur ausgenutzt werden, insbesondere bei einem Einsatz der erfindungsgemäßen Vorrichtung in Flugzeugen, wo bei einer typischen Flughöhe von ca. 10 bis 12 km Außentemperaturen von bis zu -50 °C vorherrschen. Die Ausnutzung der Außentemperatur kann auf einfache Weise z.B. durch Wärmetauscher erfolgen.

Bevorzugt umfasst die Zielfraktion bei der fraktionierten Kristallisation eine oder mehrere auskristallisierende Fraktionen des Brennstoffs, d.h. eine oder mehrere Komponenten des Brennstoffs, die einen höheren Schmelzpunkt aufweisen als die übrigen Komponenten. Hier hat sich gezeigt, dass insbesondere der Anteil an schwefelhaltigen Verbindungen in der auskristallisierenden Fraktion des Brennstoffs gegenüber der Restfraktion zum Teil deutlich verringert ist. Gleichzeitig ist die auskristallisierende Fraktion typischerweise für die Erzeugung von Wasserstoff im Vergleich zum Brennstoff optimiert.

In Abhängigkeit von der Art des Brennstoffs und/oder den für die Erzeugung von Wasserstoff gewählten Bedingungen kann eine thermische Abtrennung der Zielfraktion mittels Rektifikation oder mittels fraktionierter Kristallisation vorteilhafter sein bzw. bessere Ergebnisse liefern. Beide Verfahren können jeweils ein- oder mehrstufig durchgeführt werden, um die Effizienz der Wasserstofferzeugung und damit der erfindungsgemäßen Vorrichtung insgesamt so weit wie möglich zu erhöhen. Insbesondere kann zur Abtrennung der Zielfraktion auch eine Rektifikation mit einer fraktionierten Kristallisation kombiniert werden.

Wie bereits oben angesprochen wurde, umfasst die Umwandlungseinrichtung günstigerweise einen Katalysator für die katalytische Dehydrierung von aliphatischen und/oder aromatischen Kohlenwasserstoffen in der Zielfraktion. Dadurch, dass die Zielfraktion bevorzugt für die Erzeugung von Wasserstoff optimiert ist, kann eine solche Dehydrierung der in der Zielfraktion enthaltenen Kohlenwasserstoffverbindungen bei Wahl eines geeigneten Katalysators sehr effizient und mit einer hohen Ausbeute an Wasserstoff durchgeführt werden. Bei den dabei ablaufenden Reaktionen spricht man zum Teil auch von einer Reformierung der Kohlenwasserstoffe.

Als Edukte für die katalytische Dehydrierung dienen vorzugsweise aliphatische Kohlenwasserstoffe mit vier bis zwölf Kohlenstoffatomen, die in der Zielfraktion günstigerweise in einem höheren Anteil enthalten sind als in dem Brennstoff. Typische Dehydrierungs- bzw. Reformierungsreaktion umfassen insbesondere die Umwandlung von Alkanen (Paraffinen) zu Alkenen (Olefinen), Cycloalkanen (Naphthenen) oder Aromaten, die Umwandlung von Cycloalkanen zu Aromaten sowie die Umwandlung von einfach ungesättigten Alkenen zu mehrfach ungesättigten Alkenen. Die bei diesen Umwandlungsreaktionen (neben dem Wasserstoff) gebildeten Produkte können der Wärmekraftmaschine zugeführt oder zurück in den Brennstofftank geleitet worden.

Der Katalysator für die Dehydrierungsreaktion umfasst vorzugsweise einen Platin-, Chrom-, Nickel-, Palladium- oder Eisen-Katalysator. Durch den Einsatz von Platin auf einem Aluminiumoxidträger kann beispielsweise die Dehydrierung von Cyclohexan zu Benzol, von Decalin zu Naphtalin, und von Heptan zu Toluol katalysiert werden, sowie die Dehydrierung von Undecan, die zu verschiedenen Produkten wie 1-Undecen, 1-Methyldecalin, Pentylbenzol oder 1-Methyltetralin führen kann. Chrom(III)oxid auf Aluminiumoxid katalysiert unter anderem die Dehydrierung von Butan zu Buten und Butadien sowie von iso-Butan zu iso-Buten. Diese und weitere Katalysatoren für die Dehydrierung bzw. Reformierung von Kohlenwasserstoffen sind aus dem Stand der Technik bekannt und können in Abhängigkeit von der Zusammensetzung der Zielfraktion ausgewählt werden, wobei letztere wiederum von dem eingesetzten Brennstoff sowie dem eingesetzten Trennverfahren abhängig ist.

Die Dehydrierungsreaktion erfolgt günstigerweise unter relativ milden Druckund Temperaturbedingungen. In vielen Fällen kann die Reaktion unter Normaldruck und bei Temperaturen im Bereich von 100 bis 1500 °C durchgeführt werden, häufig auch bei Temperaturen unterhalb von 300 °C. Die für die Durchführung der Reaktion benötigte thermische Energie kann dabei durch die Wärmekraftmaschine zur Verfügung gestellt werden.

Gemäß einer bevorzugten Ausführungsform der Erfindung umfasst die Vorrichtung ferner eine Reinigungseinrichtung zur Reinigung des Wasserstoffs. Durch eine zusätzliche Reinigung des durch die Umwandlungseinrichtung erzeugten Wasserstoffs kann einer möglichen Beeinträchtigung des Brennstoffzellensystems durch Verunreinigungen vorgebeugt werden. Im Rahmen der Reinigung des Wasserstoffs können insbesondere leicht flüchtige Produkte, die bei der Dehydrierungsreaktion entstehen, durch eine Kühlfalle oder dergleichen abgetrennt werden.

Der mittels der Umwandlungseinrichtung erzeugte und gegebenenfalls gereinigte Wasserstoff wird bevorzugt direkt dem Brennstoffzellensystem als Brenngas zugeleitet. Alternativ oder zusätzlich kann auch vorgesehen sein, den Wasserstoff zwischenzuspeichern.

Das Brennstoffzellensystem der erfindungsgemäßen Vorrichtung kann insbesondere eine alkalische Brennstoffzelle (AFC), eine Membranbrennstoffzelle (PEFC), eine Phosphorsäurebrennstoffzelle (PAFC), eine Carbonatschmelzenbrennstoffzelle (MCFC) oder eine oxidkeramische Brennstoffzelle (SOFC) umfassen. Alle diese Brennstoffzellentypen werden bevorzugt mit Luftsauerstoff aus der Umgebung als Oxidatorgas betrieben, sodass keine Speicherung des Oxidatorgases erforderlich ist. Das Brennstoffzellensystem kann einen oder mehrere Brennstoffzellenblöcke umfassen.

Die erfindungsgemäße Vorrichtung kann mit besonderem Vorteil zum Betrieb eines Land-, Wasser- oder Luftfahrzeuges verwendet werden. Durch die Erfindung ist es möglich, auf effiziente Weise aus einem einzigen Brennstoff die für den Antrieb des Fahrzeuges erforderliche mechanische (kinetische) Energie zu erzeugen sowie darüber hinaus in ausreichendem Umfang elektrische Energie, um auch umfangreiche elektrische Systeme des Fahrzeugs versorgen zu können. Insbesondere bei Flugzeugen wird durch die erfindungsgemäße Vorrichtung eine als "more electric aircraft" bezeichnete Flugzeugarchitektur ermöglicht, bei der hydraulische Steuerungssysteme vollständig oder überwiegend durch elektrische System ersetzt werden, und bei der dadurch ein deutlich erhöhter Bedarf an elektrischer Energie besteht.

Die vorliegende Erfindung ist jedoch nicht auf eine Verwendung in Fahrzeugen beschränkt, sondern kann z.B. auch im Rahmen von dezentralen Kraft-Wärme-Kopplungsanlagen eingesetzt werden.

Der Erfindung liegt ferner die Aufgabe zugrunde, ein Verfahren zur Erzeugung von mechanischer und elektrischer Energie vorzuschlagen, welches effizient und auf einfache Weise durchgeführt werden kann.

Diese Aufgabe wird bei dem eingangs genannten Verfahren erfindungsgemäß dadurch gelöst, dass das Verfahren umfasst:
- Bereitstellen eines Brennstoffs zum Betrieb einer Wärmekraftmaschine;
- Abtrennen einer Zielfraktion des Brennstoffs mittels eines thermishen Trennverfahrens
- Erzeugen von Wasserstoff aus der Zielfraktion; und
- Verwenden des Wasserstoffs als Brenngas für ein Brennstoffzellensystem, wobei des thermische Trennverfahren eine fraktionierte Kristallisation des Brennstoffs umfasst.

Besondere Vorteile des erfindungsgemäßen Verfahrens wurden bereits im Zusammenhang mit der erfindungsgemäßen Vorrichtung erläutert.

Die Abtrennung der Zielfraktion im Rahmen des erfindungsgemäßen Verfahrens erfolgt mittels eines thermischen Trennverfahrens. Das thermische Trennverfahren kann insbesondere eine Rektifikation und eine fraktionierte Kristallisation des Brennstoffs umfassen, wie dies bereits oben im Detail ausgeführt wurde.

Besonders günstig ist es, wenn von der Wärmekraftmaschine erzeugte Wärme für die Durchführung des thermischen Trennverfahrens genutzt wird. Dies betrifft insbesondere eine zumindest partielle Verdampfung des Brennstoffs bei einer Rektifikation, um bevorzugt eine oder mehrere niedriger siedende Fraktionen des Brennstoffs als Zielfraktion abzutrennen. Die Abtrennung der Zielfraktion kann dadurch ohne eine wesentliche Beeinträchtigung der Gesamteffizienz des Verfahrens durchgeführt werden.

Das erfindungsgemäße Verfahren kann besonders vorteilhaft zum Betrieb eines Land-, Wasser- oder Luftfahrzeugs eingesetzt werden, wie dies ebenfalls bereits im Zusammenhang mit der erfindungsgemäßen Vorrichtung beschrieben wurde. Besonders vorteilhaft ist es, wenn die Umgebungstemperatur des Fahrzeugs für die Durchführung des thermischen Trennverfahrens genutzt wird. Dies gilt insbesondere für die sehr niedrigen Außentemperaturen beim Betrieb eines Flugzeugs, die sowohl für eine Abkühlung des Brennstoffs bei einer fraktionierten Kristallisation als auch für die Kondensation einer oder mehrerer höher siedender Fraktionen bei einer Rektifikation genutzt werden können.

Weitere bevorzugte Ausführungsformen des erfindungsgemäßen Verfahrens wurden ebenfalls bereits im Zusammenhang mit der erfindungsgemäßen Vorrichtung beschrieben.

Diese und weitere Vorteile der vorliegenden Erfindung werden im Folgenden anhand von Ausführungsbeispielen unter Bezugnahme auf die Figuren der Zeichnung näher erläutert. Es zeigen im Einzelnen:
- Figur 1:: eine schematische Darstellung eines Ausführungsbeispiels der erfindungsgemäßen Vorrichtung;
- Figur 2:: ein Diagramm betreffend den Temperaturverlauf bei der fraktio- nierten Kristallisation von Kerosin;
- Figur 3:: ein Diagramm betreffend den Druck- und Temperaturverlauf bei der Rektifikation von Kerosin;
- Figur 4:: ein Diagramm betreffend den Schwefelanteil in verschiedenen Fraktionen von Kerosin bei der Rektifikation.

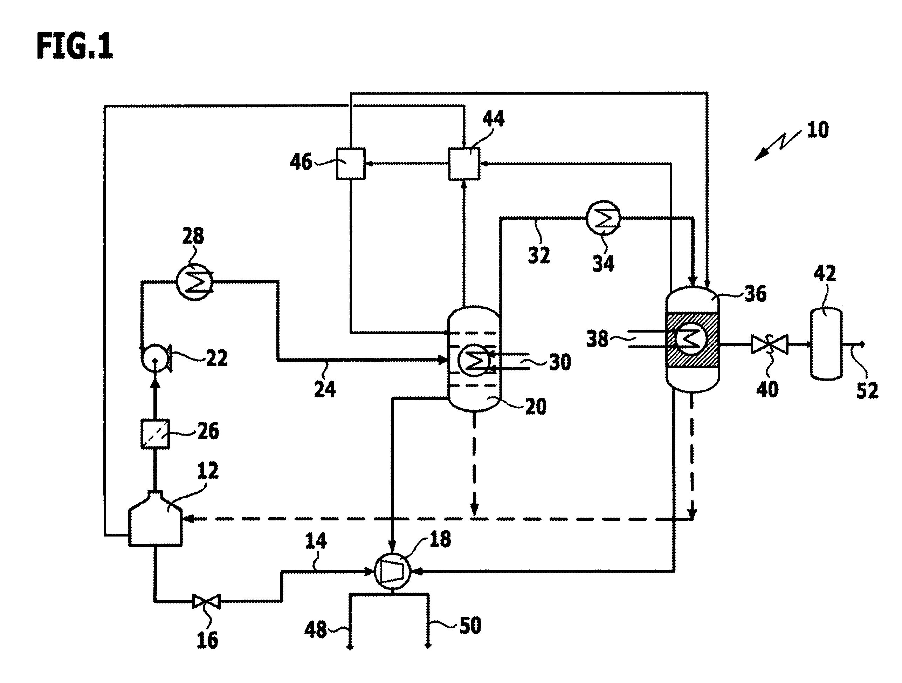

Die Figur 1 zeigt eine schematische und vereinfachte Darstellung eines Ausführungsbeispiels einer erfindungsgemäßen Vorrichtung, die als Ganzes mit 10 bezeichnet ist.

Die Vorrichtung 10 umfasst einen Brennstofftank 12, in dem ein Brennstoff, z.B. Kerosin, Benzin oder Dieselkraftstoff, bevorratet ist. Der Brennstofftank 12 ist über eine Brennstoffleitung 14 mit einem regelbaren Ventil 16 mit einer Wärmekraftmaschine 18 verbunden. Bei der Wärmekraftmaschine 18 kann es sich insbesondere um ein Strahltriebwerk oder um einen Verbrennungsmotor handeln.

Die Vorrichtung 10 umfasst ferner eine thermische Trenneinrichtung 20, zu der Brennstoff aus dem Brennstofftank 12 mittels einer Pumpe 22 zugeführt werden kann. Bei der Zuführungsleitung 24 vom Brennstofftank 12 zu der thermischen Trenneinrichtung 20 sind ferner ein Filter 26 sowie ein Wärmetauscher 28 zwischengeschaltet.

Die thermische Trenneinrichtung 20 umfasst gemäß einer nicht erfindungsgemaßen Variante der Vorrichtung 10 eine Einrichtung zur Rektifikation des Brennstoffs, d.h. insbesondere eine Rektifikationskolonne, mit der ein Gemisch aus aliphatischen und/oder aromatischen Kohlenwasserstoffen in eine oder mehrere niedriger siedende Fraktionen (Kopffraktion) und eine oder mehrere höher siedende Fraktionen (Sumpffraktion) aufgetrennt werden kann.

Gemäß einer erfindungsgemäßen Variante der Vorrichtung 10 umfasst die thermische Trenneinrichtung 20 eine Einrichtung zur Kristallisation des Brennstoffs. Durch Abkühlen eines Kohlenwasserstoffgemischs können mittels einer solchen Einrichtung eine oder mehrere auskristallisierende Fraktionen als Feststoff von der flüssigen Restfraktion des Gemischs abgetrennt werden. Eine Einrichtung zur fraktionierten Kristallisation des Brennstoffs umfasst günstigerweise einen Vorkühler und einen Hauptkühler.

Die thermische Trenneinrichtung 20 umfasst ein oder mehrere Heiz- und/oder Kühlelemente 30, mit denen zur Durchführung des thermischen Trennverfahrens dem Brennstoff Wärme zu- bzw. abgeführt werden kann, je nachdem, ob eine Rektifikation oder eine fraktionierte Kristallisation durchgeführt wird.

Die thermische Trenneinrichtung 20 ist über eine weitere Zuführungsleitung 32 und einen dazwischen geschalteten Wärmetauscher 34 mit einer Umwandlungseinrichtung 36 verbunden. Bei der Umwandlungseinrichtung 36 handelt es sich gemäß dem vorliegenden Ausführungsbeispiel der erfindungsgemäßen Vorrichtung 10 um einen Reaktor für die katalytische Dehydrierung einer oder mehrerer Kohlenwasserstoffe in der von dem Brennstoff abgetrennten Zielfraktion. Durch ein Heizelement 38 kann dabei eine für die Dehydrierungsreaktion optimale Reaktionstemperatur eingestellt werden.

Die Umwandlungseinrichtung 36 ist über ein Druckregelventil 40 mit einem Brennstoffzellensystem 42 verbunden. Das Brennstoffzellensystem 42 umfasst eine oder mehrere Brennstoffzellenblöcke, die mit dem in der Umwandlungseinrichtung 36 erzeugten Wasserstoff als Brenngas versorgt werden können.

Die Vorrichtung 10 umfasst des Weiteren ein Mess- und Steuerungssystem zur Durchführung des erfindungsgemäßen Verfahrens, welches in der Figur 1 in Form einer Messeinrichtung 44 und einer Steuerungseinrichtung 46 dargestellt ist. Durch die Messeinrichtung 44 können verschiedene Prozessparameter in der Trenneinrichtung 20 und der Umwandlungseinrichtung 36 erfasst werden, wie z.B. die Temperatur und der Druck des Brennstoffs und der verschiedenen Fraktionen, die Reaktionstemperatur bei der katalytischen Dehydrierung, der Wasserstoffpartialdruck, sowie zeitliche Veränderungen dieser Parameter. Desweiteren kann der Füllstand in dem Brennstofftank 12 sowie gegebenenfalls die Zusammensetzung des Brennstoffs erfasst werden. In Abhängigkeit von den durch die Messeinrichtung 44 ermittelten Daten kann durch die Steuerungseinrichtung 46 die Verfahrensführung gesteuert werden.

Das erfindungsgemäße Verfahren funktioniert wie folgt: Der in dem Brennstofftank 12 bereitgestellte Brennstoff wird über die Brennstoffleitung 14 und das Ventil 16 der Wärmekraftmaschine 18 zugeführt. Beim Betrieb der Wärmekraftmaschine 18 wird sowohl mechanische als auch thermische Energie erzeugt (angedeutet durch die Pfeile 48 und 50). Während die mechanische Energie, je nach Anwendung der Vorrichtung 10, z.B. für den Antrieb eines Kraftfahrzeugs oder eines Flugzeugs genutzt wird, kann ein Teil der durch die Wärmekraftmaschine 18 erzeugten thermischen Energie auf effiziente Weise innerhalb des erfindungsgemäßen Verfahrens genutzt werden, insbesondere um die thermische Trenneinrichtung 20 über das Heizelement 30 sowie die Umwandlungseinrichtung 36 über das Heizelement 38 mit der nötigen thermischen Energie zu versorgen.

Ein geringerer Anteil des Brennstoffs, typischerweise etwa 1 bis 5% der für den Betrieb der Wärmekraftmaschine benötigten Brennstoffmenge, wird bei dem erfindungsgemäßen Verfahren zur Erzeugung von elektrischer Energie durch das Brennstoffzellensystem 42 eingesetzt. Hierzu wird ein entsprechender Teil des Brennstoffs aus dem Brennstofftank 12 durch die Zuführungsleitung 24 der thermischen Trenneinrichtung 20 zugeführt. Durch den Filter 26 können zuvor feste Verunreinigungen in dem Brennstoff entfernt werden. Der Wärmetauscher 28 dient dazu, den Brennstoff bereits vor der Zuführung zu der thermischen Trenneinrichtung 20 auf eine vorgegebene Temperatur zu bringen, sodass das thermische Trennverfahren möglichst reproduzierbar durchgeführt werden kann. Je nach Art des eingesetzten Trennverfahrens wird der Brennstoff durch den Wärmetauscher 28 dementsprechend vorgewärmt oder vorgekühlt.

In dem Fall, dass im Rahmen eines nicht erfindungsgemäßen Verfahrens eine Rektifikation als thermisches Trennverfahren durchgeführt wird, wird der der thermischen Trenneinrichtung 20 zugeführte Brennstoff mit Hilfe des Heizelements 30 erhitzt und zumindest teilweise verdampft. Verschiedene Fraktionen des Brennstoffs (d.h. insbesondere verschiedene Kohlenwasserstoffe) werden mit Hilfe einer Rektifikationskolonne aufgrund ihrer unterschiedlichen Siedepunkte aufgetrennt. Eine oder mehrere niedriger siedende Fraktionen, die für die Erzeugung von Wasserstoff gegenüber dem Brennstoff optimiert sind, werden als Zielfraktion abgetrennt.

Die Rektifikation des Brennstoffs durch die thermische Trenneinrichtung 20 kann entweder unter Normaldruck oder unter reduziertem Druck durchgeführt werden.

Gemäß einer erfindungsgemäßen Variante der Vorrichtung 10 umfasst das thermische Trennverfahren eine fraktionierte Kristallisation des Brennstoffs. Der Brennstoff wird dabei durch eine oder mehrere Kühlelemente 30 soweit abgekühlt, dass eine oder mehrere Komponenten (d.h. insbesondere Kohlenwasserstoffe) aufgrund ihres höheren Schmelzpunktes im Vergleich zu den übrigen Komponenten auskristallisieren. Gemäß einer bevorzugten Verfahrensführung wird der Brennstoff zunächst in einer Vorkühleinheit abgekühlt (z.B. bis zu -40 °C im Fall von Kerosin), und der vorgekühlte Brennstoff wird dann in einer Hauptkühleinheit bis zur Kristallisation weiter abgekühlt (z.B. bis zu -90 °C im Fall von Kerosin). Der auskristallisierte Feststoff kann als Zielfraktion auf einfache Weise von der flüssigen Restfraktion abgetrennt werden.

Bei der Durchführung der fraktionierten Kristallisation kann, insbesondere bei Einsatz der Vorrichtung 10 in einem Flugzeug, die niedrigere Außentemperatur für die Abkühlung des Brennstoffs mittels des oder der Kühlelemente 30 ausgenutzt werden.

Die aus dem thermischen Trennverfahren resultierende Zielfraktion wird durch die Zuführungsleitung 32 der Umwandlungseinrichtung 36 zugeführt. Da die Zielfraktion in Abhängigkeit von der Art des thermischen Trennverfahrens zunächst in fester, flüssiger oder gasförmiger Form anfallen kann, wird sie zuvor durch den Wärmetauscher 34 auf eine vorgegebene Temperatur gebracht, um einen effizienten und reproduzierbaren Betrieb der Umwandlungseinrichtung 36 zu begünstigen.

Die der Umwandlungseinrichtung 36 zugeführte Zielfraktion wird durch die Einwirkung eines geeigneten Katalysators, insbesondere eines Platin-, Chrom-, Nickel-, Palladium- oder Eisen-Katalysators, unter Erzeugung von Wasserstoff dehydriert bzw. reformiert. Die Zielfraktion enthält eine oder mehrere dehydrierbare Komponenten, insbesondere aliphatische Kohlenwasserstoffe. Je nach Zusammensetzung der Zielfraktion und Art des eingesetzten Katalysators kann die Dehydrierungsreaktion bei Temperaturen im Bereich von ca. 100 bis 1.500 °C durchgeführt werden, wobei die erforderliche thermische Energie durch das Heizelement 38 zugeführt wird.

Der durch die Umwandlungseinrichtung 36 erzeugte Wasserstoff wird von den übrigen Produkten der Dehydrierungsreaktion abgetrennt und gegebenenfalls einer weiteren Reinigung mittels einer Reinigungseinrichtung (in der Figur 1 nicht dargestellt) unterzogen. Er wird über das Druckregelventil 40 dem Brennstoffzellensystem 42 zur Erzeugung von elektrischer Energie (angedeutet durch den Pfeil 52) zugeleitet. Als Oxidatorgas für das Brennstoffzellensystem 42 dient Luftsauerstoff aus der Umgebung.

Sowohl die bei dem thermischen Trennverfahren anfallende Restfraktion des Brennstoffs als auch die bei der katalytischen Dehydrierung gebildeten Produkte können von der thermischen Trenneinrichtung 20 bzw. der Umwandlungseinrichtung 36 direkt der Wärmekraftmaschine 18 zugeleitet werden. Alternativ ist jedoch auch eine Rückleitung in den Brennstofftank 12 möglich (dargestellt durch gestrichelte Pfeile). In beiden Fällen haben diese Komponenten trotz ihrer gegenüber dem Brennstoff veränderten Zusammensetzung keinen wesentlichen Einfluss auf den Betrieb der Wärmekraftmaschine 18, da sie nur einen sehr geringen Anteil der Brennstoffmenge ausmachen, die der Wärmekraftmaschine insgesamt zugeführt wird.

### Beispiele

Anhand der nachfolgend beschriebenen Versuche konnte gezeigt werden, dass durch die im Rahmen der vorliegenden Erfindung zum Einsatz kommenden Trennverfahren, insbesondere durch die oben beschriebenen thermischen Trennverfahren der fraktionierten Kristallisation und der Rektifikation, der Anteil an schwefelhaltigen Verbindungen in der Zielfraktion gegenüber dem Brennstoff deutlich reduziert werden kann. Darüber hinaus kann durch diese Verfahren die Zusammensetzung der Zielfraktion für die Erzeugung von Wasserstoff gegenüber dem Brennstoff optimiert werden.

Die Versuche wurden mit Kerosin (Typ Jet A-1) durchgeführt, welches als Brennstoff für Strahltriebwerke von Flugzeugen eingesetzt wird. Kerosin umfasst ein komplexes Gemisch aus einer Vielzahl von aliphatischen und aromatischen Kohlenwasserstoffen. Es enthält auch verschiedene schwefelhaltige Verbindungen, und zwar typischerweise 0,3 Gew.-% Sulfide und 0,003 Gew.-% Mercaptane, wobei die verschiedenen Schwefelverbindungen Siedepunkte im Bereich von ca. 35 bis 240 °C aufweisen. Daneben sind noch geringere Menge an Disulfiden und freiem Schwefel enthalten. In diesem Mengenanteil wirken Schwefelverbindungen als Katalysatorgift für die bei der katalytischen Dehydrierung eingesetzten Metallkatalysatoren, sodass Kerosin als solches nicht für die Erzeugung von Wasserstoff eingesetzt werden kann.

Im Rahmen der Versuche zur Rektifikation wurde zusätzlich auch Dieselkraftstoff untersucht.

### Fraktionierte Kristallisation

Kerosin (Jet A-1) wurde einer fraktionierten Kristallisation unterworfen, wobei das Kerosin jeweils über einen Zeitraum von 5 Stunden zunächst in einem Vorkühler auf ca. -30 °C und anschließend in einem Hauptkühler auf ca. -75 °C gekühlt wurde.

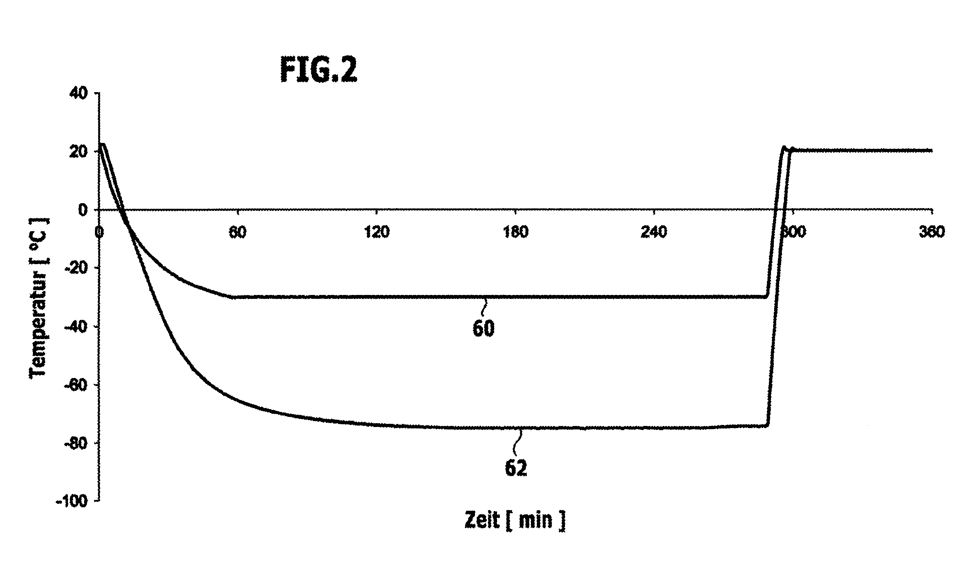

Der genaue Temperaturverlauf während der fraktionierten Kristallisation ist in dem Diagramm der Figur 2 dargestellt. Die Kurve 60 gibt den Temperaturverlauf im Vorkühler und die Kurve 62 den Temperaturverlauf im Hauptkühler an.

Die im Verlauf der Hauptkühlung auskristallisierte Fraktion des Kerosins (Zielfraktion) wurde von der weiterhin flüssigen Fraktion (Restfraktion) abgetrennt und der Anteil an schwefelhaltigen Verbindungen in beiden Fraktionen mittels Gaschromatographie bestimmt. Als Ergebnis wurde bei mehreren Versuchen 97-99% des im Kerosin enthaltenen Schwefelanteils in der Restfraktion gefunden, während die Zielfraktion lediglich 1-3% der schwefelhaltigen Verbindungen enthielt.

Die auf diese Weise durch fraktionierte Kristallisation gewonnene Zielfraktion des Kerosins kann aufgrund des deutlich reduzierten Schwefelgehalts ohne Weiteres für die katalytische Dehydrierung im Rahmen des erfindungsgemäßen Verfahrens eingesetzt werden.

Die Zusammensetzung der Zielfraktion und der Restfraktion des Kerosins nach der fraktionierten Kristallisation im Hinblick auf verschiedene Typen von Kohlenwasserstoffen wurde ebenfalls mittels Gaschromatographie analysiert.

Das Ergebnis ist in der nachfolgenden Tabelle 1 dargestellt. Dabei ist jeweils angegeben, welcher Anteil der verschiedenen Kohlenwasserstofftypen, bezogen auf deren Gesamtanteil im Kerosin, in der Zielfraktion bzw. in der Restfraktion wiedergefunden wurde (aufgrund von Messungenauigkeiten weichen die Summen geringfügig von 100% ab).

**Tabelle 1**

| **Kohlenwasserstoffe** | **Zielfraktion [%]** | **Restfraktion [%]** |
|---|---|---|
| Cycloalkane (Naphthene) | 37,25 | 62,89 |
| n-Alkane (Paraffine) | 41,44 | 58,32 |
| iso-Alkane (iso-Paraffine) | 9,75 | 90,10 |
| Alkene (Olefine) | 0,00 | 101,73 |
| Aromatische Verbindungen | 5,25 | 94,82 |
| Sonstige | 8,69 | 91,12 |

Ein beträchtlicher Anteil der Cycloalkane und der n-Alkane (ca. 37% bzw. ca. 41%) befindet sich nach der fraktionierten Kristallisation in der Zielfraktion, während alle anderen Kohlenwasserstofftypen (iso-Alkane, Alkene, aromatische Verbindungen und sonstige Kohlenwasserstoffe) zu über 90% in der Restfraktion verbleiben.

Cycloalkane (Naphthene) und n-Alkane (Paraffine) sind bevorzugte Edukte für die Erzeugung von Wasserstoff durch katalytische Dehydrierung, wobei Cycloalkane typischerweise zu Aromaten und n-Alkane typischerweise zu Alkenen dehydriert werden. Hierfür können insbesondere Platin- bzw. Chromkatalysatoren zum Einsatz kommen.

Lediglich ca. 5% des Anteils an aromatischen Kohlenwasserstoffen, die für eine Dehydrierung kaum geeignet sind und die zur Rußbildung führen können, befanden sich in der Zielfraktion.

Zusätzlich zur Reduzierung des Schwefelgehaltes kann durch die fraktionierte Kristallisation somit eine deutliche Optimierung der Zusammensetzung des Kohlenwasserstoffgemisches im Hinblick auf die Erzeugung von Wasserstoff erreicht werden.

### Rektifikation (nicht erfindungsgemäß)

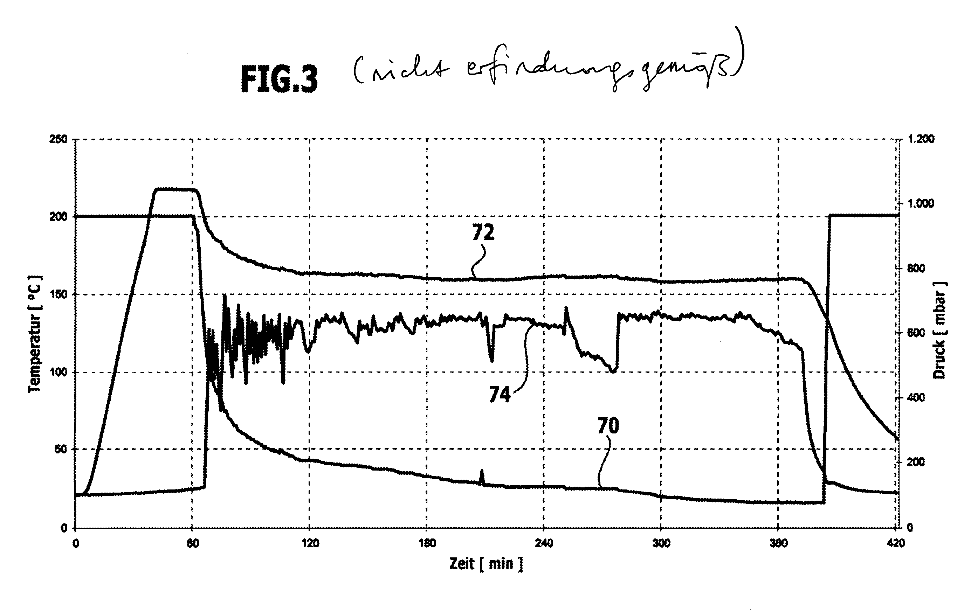

Es wurde eine Rektifikation von Kerosin (Jet A-1) durchgeführt, wobei das darin enthaltene Kohlenwasserstoffgemisch in 40 verschiedene Fraktionen aufgetrennt wurde. Die Rektifikation erfolgte unter vermindertem Druck, wobei in dem Diagramm der Figur 3 der genaue Verlauf des Drucks (Kurve 70) sowie der Sumpftemperatur (Kurve 72) und der Kopftemperatur (Kurve 74) der Rektifikationskolonne dargestellt sind.

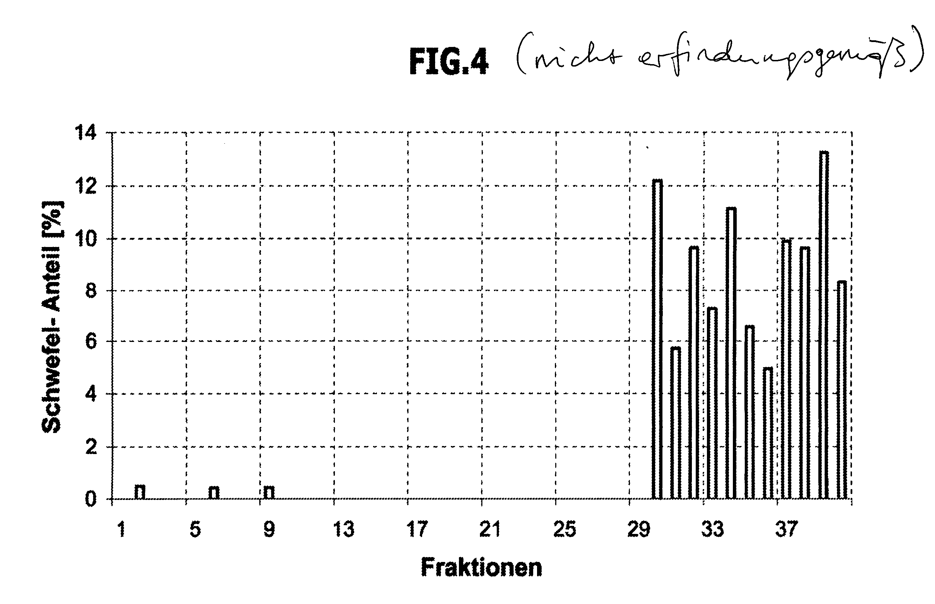

In dem Diagramm der Figur 4 ist der mittels Gaschromatographie bestimmte Anteil an schwefelhaltigen Verbindungen in den einzelnen Fraktionen dargestellt, jeweils bezogen auf den gesamten Schwefelanteil des Kerosins. Fast der gesamte Schwefelanteil befand sich nach der Rektifikation in den höher siedenden Fraktionen 30 bis 40, während die niedriger siedenden Fraktionen 1 bis 29 lediglich ca. 0,5% der schwefelhaltigen Verbindung des Kerosins enthielten.

Dieses deutliche Ergebnis zeigt, dass auch durch eine Rektifikation eine Zielfraktion mit einem erheblich reduzierten Schwefelanteil von einem Brennstoff abgetrennt werden kann. Die klare Verteilung der schwefelhaltigen Verbindungen auf die verschiedenen Fraktionen gemäß der Figur 4 macht auch deutlich, dass bereits mit einer wesentlich geringeren Zahl von Fraktionen als bei dem hier beschriebenen Versuch, d.h. auch mit einer relativ einfachen Verfahrensführung und mit einem geringen apparativen Aufwand, eine optimierte Zielfraktion im Rahmen des erfindungsgemäßen Verfahrens abgetrennt werden kann.

Als weiteres Beispiel wurde auch eine Rektifikation von Dieselkraftstoff durchgeführt. In diesem Fall wurde der Hauptanteil der schwefelhaltigen Verbindungen mit den niedriger siedenden Fraktionen 1 bis 17 abgetrennt, während die höher siedenden Fraktionen 18 bis 35 lediglich ca. 1,5% des Schwefelanteils enthielten. Die Umkehrung der Verteilung des Schwefelanteils im Vergleich zum Kerosin erklärt sich dadurch, dass die Komponenten des Dieselkraftstoffs durchschnittlich höhere Siedepunkte aufweisen als diejenigen des Kerosins. Gleichwohl gelang auch hier eine sehr deutliche Abtrennung.

Durch die Verwendung der höher siedenden Fraktionen 18 bis 35 als Zielfraktion kann somit auch bei Dieselkraftstoff eine effektive Entschwefelung der für die Wasserstofferzeugung eingesetzten Kohlenwasserstoffe erreicht werden.

## Patentansprüche

1. Vorrichtung (10) zur Erzeugung von mechanischer und elektrischer Energie aus einem Brennstoff, umfassend
- eine mit dem Brennstoff betriebene Wärmekraftmaschine (18);
- eine thermische Trenneinrichtung (20), mit der eine Zielfraktion des Brennstoffs abtrennbar ist;
- eine Umwandlungseinrichtung (36), mit der aus der Zielfraktion Wasserstoff erzeugbar ist; und
- ein mit dem Wasserstoff als Brenngas betriebenes Brennstoffzellensystem (42),
**dadurch gekennzeichnet, dass** die thermische Trenneinrichtung (20) eine Einrichtung zur fraktionierten Kristallisation des Brennstoffs umfasst.

2. Vorrichtung (10) nach Anspruch 1, wobei die Zielfraktion ein Gemisch aus Kohlenwasserstoffen umfasst, welches für die Erzeugung von Wasserstoff durch die Umwandlungseinrichtung (36) gegenüber dem Brennstoff optimiert ist.

3. Vorrichtung (10) nach Anspruch 2, wobei die Zielfraktion einen höheren Anteil an aliphatischen Kohlenwasserstoffen aufweist als der Brennstoff.

4. Vorrichtung (10) nach einem der vorangehenden Ansprüche, wobei die Zielfraktion einen geringeren Anteil an schwefelhaltigen Verbindungen aufweist als der Brennstoff.

5. Vorrichtung (10) nach einem der vorangehenden Ansprüche, wobei die Zielfraktion eine oder mehrere auskristallisierende Fraktionen des Brennstoffs umfasst.

6. Verfahren zur Erzeugung von mechanischer und elektrischer Energie aus einem Brennstoff, umfassend:
- Bereitstellen eines Brennstoffs zum Betrieb einer Wärmekraftmaschine;
- Abtrennen einer Zielfraktion des Brennstoffs mittels eines thermischen Trennverfahrens;
- Erzeugen von Wasserstoff aus der Zielfraktion; und
- Verwenden des Wasserstoffs als Brenngas für ein Brennstoffzellensystem,
**dadurch gekennzeichnet, dass** das thermische Trennverfahren eine fraktionierte Kristallisation des Brennstoffs umfasst.

7. Verfahren nach Anspruch 6, wobei die Zielfraktion ein Gemisch aus Kohlenwasserstoffen umfasst, welches für die Erzeugung von Wasserstoff gegenüber dem Brennstoff optimiert ist.

8. Verfahren nach Anspruch 7, wobei die Zielfraktion einen höheren Anteil an aliphatischen Kohlenwasserstoffen aufweist als der Brennstoff.

9. Verfahren nach einem der Ansprüche 6 bis 8, wobei die Zielfraktion einen geringeren Anteil an schwefelhaltigen Verbindungen aufweist als der Brennstoff.

10. Verfahren nach einem der Ansprüche 6 bis 9, wobei die Zielfraktion eine oder mehrere auskristallisierende Fraktionen des Brennstoffs umfasst.

11. Verfahren nach einem der Ansprüche 6 bis 10 zum Betrieb eines Land-, Wasser- oder Luftfahrzeugs.

12. Verfahren nach Anspruch 11, wobei die Umgebungstemperatur des Fahrzeugs für die Durchführung des thermischen Trennverfahrens genutzt wird.

## Claims

1. An apparatus (10) for generating mechanical and electrical energy from a fuel, comprising
- a heat engine (18) operated by the fuel;
- a thermal separating device (20), by means of which a target fraction of the fuel is separated;
- a conversion device (36), by means of which hydrogen is generated from the target fraction; and
- a fuel cell system (42) operated by the hydrogen as a combustion gas,
**characterized in that** the thermal separating device (20) comprises a device for fractional crystallization of the fuel.

2. The apparatus (10) according to claim 1, wherein the target fraction comprises a mixture of hydrocarbons that is optimized with reference to the fuel for the generation of hydrogen by the conversion device (36).

3. The apparatus (10) according to claim 2, wherein the target fraction has a higher proportion of aliphatic hydrocarbons than the fuel.

4. The apparatus (10) according to any one of the preceding claims, wherein the target fraction has a lower proportion of sulphur-containing compounds than the fuel.

5. The apparatus (10) according to any one of the preceding claims, wherein the target fraction comprises one or more fractions of the fuel that crystallize out.

6. A method of generating mechanical and electrical energy from a fuel, comprising:
- providing a fuel for operating a heat engine;
- separating a target fraction of the fuel by means of a thermal separating method;
- generating hydrogen from the target fraction; and
- using the hydrogen as a combustion gas for a fuel cell system,
**characterized in that** the thermal separating method comprises fractional crystallization of the fuel.

7. The method according to claim 6, wherein the target fraction comprises a mixture of hydrocarbons that is optimized with reference to the fuel for the generation of hydrogen.

8. The method according to claim 7, wherein the target fraction has a higher proportion of aliphatic hydrocarbons than the fuel.

9. The method according to any one of claims 6 to 8, wherein the target fraction has a lower proportion of sulphur-containing compounds than the fuel.

10. The method according to any one of claims 6 to 9, wherein the target fraction comprises one or more fractions of the fuel that crystallize out.

11. The method according to any one of claims 6 to 10 for operating a land-vehicle, water-craft or aircraft.

12. The method according to claim 11, wherein the ambient temperature of the vesicle or craft is utilized for carrying out the thermal separating method.

## Revendications

1. Dispositif (10) de production d'énergie mécanique et électrique à partir d'un combustible, comprenant.
- un moteur thermique (18) fonctionnant au moyen du combustible ;
- un dispositif de séparation thermique (20) au moyen duquel une fraction cible du combustible peut être séparée ;
- un dispositif de conversion (36) au moyen duquel de l'hydrogène peut être produit à partir de la fraction cible ; et
- un système de pile à combustible (42) fonctionnant au moyen de l'hydrogène comme gaz combustible,
**caractérisé en ce que** le dispositif de séparation thermique (20) comporte un dispositif de cristallisation fractionnée du combustible.

2. Dispositif (10) selon la revendication 1, dans lequel la fraction cible comporte un mélange d'hydrocarbures optimisé pour la production d'hydrogène par le dispositif de conversion (36) par rapport au combustible.

3. Dispositif (10) selon la revendication 2, dans lequel la fraction cible présente une part d'hydrocarbures aliphatiques supérieure à celle du combustible.

4. Dispositif (10) selon l'une quelconque des revendications précédentes, dans lequel la fraction cible présente une part de composés sulfureux inférieure à celle du combustible.

5. Dispositif (10) selon l'une quelconque des revendications précédentes, dans lequel la fraction cible comporte une ou plusieurs fractions de combustible se recristallisant.

6. Procédé de production d'énergie mécanique et électrique à partir d'un combustible, comprenant :
- la mise à disposition d'un combustible pour le fonctionnement d'un moteur thermique ;
- la séparation d'une fraction cible de combustible à l'aide d'un procédé de séparation thermique ;
- la production d'hydrogène à partir de la fraction cible ; et
- l'utilisation de l'hydrogène comme gaz combustible pour un système de pile à combustible, **caractérisé en ce que** le procédé de séparation thermique comporte une cristallisation fractionnée du combustible.

7. Procédé selon la revendication 6, dans lequel la fraction cible comporte un mélange d'hydrocarbures optimisé pour la production d'hydrogène par rapport au combustible.

8. Procédé selon la revendication 7, dans lequel la fraction cible présente une part d'hydrocarbures aliphatiques supérieure à celle du combustible.

9. Procédé selon l'une quelconque des revendications 6 à 8, dans lequel la fraction cible présente une part de composés sulfureux inférieure à celle du combustible.

10. Procédé selon l'une quelconque des revendications 6 à 9, dans lequel la fraction cible comporte une ou plusieurs fractions de combustible se recristallisant.

11. Procédé selon l'une quelconque des revendications 6 à 10 pour le fonctionnement d'un véhicule terrestre, d'un navire ou d'un aéronef.

12. Procédé selon la revendication 11, dans lequel la température ambiante du véhicule est utilisée pour la réalisation du procédé de séparation thermique.
